# EUROPÄISCHE PATENTSCHRIFT

(11) **EP 2 322 726 B1**
(45) Veröffentlichungstag und Bekanntmachung des Hinweises auf die Patenterteilung: **04.07.2012**
(21) Anmeldenummer: 10014528.3
(22) Anmeldetag: 11.11.2010
(51) Int. Cl.: E02D 31/02

(54) **Noppenelement**
Tuft element
Élément à picots

(30) Priorität: 17.11.2009 DE 102009053633; 04.02.2010 DE 202010001783 U
(43) Veröffentlichungstag der Anmeldung: 18.05.2011
(73) Patentinhaber: Droog, Stephan M., 4690 Visé (BE)
(72) Erfinder: Droog, Stephan M., 4690 Visé (BE)
(74) Vertreter: Meinke, Jochen

(56) Entgegenhaltungen:
- EP-A2- 1 914 351
- WO-A1-03/097953
- DE-B3-102005 044 800
- DE-U1-202010 001 783
- GB-A- 2 079 415

## Beschreibung

Die Erfindung betrifft ein Noppenelement mit einer Mehrzahl von Noppen, die durch Thermoformen oder Tiefziehen einer Kunststofffolie, beispielsweise einer Folienbahn oder -platte, gebildet sind und jedenfalls einseitig von der Folienbahn oder -platte vorstehen.

Noppenelemente weisen einen Flachbereich und über diesen überstehende, jeweils einen Noppenmantel und einen Noppenkopf aufweisende Noppen auf.

Gattungsgemäße Noppenelemente, beispielsweise Noppenbahnen, werden unter anderem für die Bauwerksabdichtung, d.h. für den/die Bauwerkschutz und -Drainung, aber auch für die Dachbegrünung und als Drainageschichten, z.B. für Parkplätze oder begeh- und befahrbare Wege mit Rasen-Gittersteinen und dgl. eingesetzt. Bei der Bauwerksabdichtung dienen sie etwa dem Schutz von Abdichtungen im Kellerbereich, um beim Verfüllen der Baugrube eine Beschädigung der Abdichtung durch das Erdreich und Steine zu verhindern. Zugleich kann durch die Noppenelemente seitlich an das Gebäude anströmendes Wasser bis an den Kellerboden zu einem Drainagerohr abgeführt werden. Neben der Wasserabführung erfüllt eine vertikal angebrachte Noppenbahn auch noch eine Wärmedämmfunktion. Zusätzlich kann ein Schutz der Kellerwände vor Bodenfeuchtigkeit und eine entsprechende Belüftung durch Ventilation erzielt werden. Noppenbahnen schützen auch Fundamente vor Feuchtigkeit und tragen zur guten Belüftung bei (Grundmauerschutz) und schützen auch Estrichböden vor aufsteigender Nässe (Nässesperre). Im Bereich der Dachbegrünung dienen sie als Schutz- und Drainageschicht im Gründachaufbau und können ansonsten sowohl horizontal als auch vertikal eingebaut werden.

In jedem Fall sind derartige Noppenbahnen hohen Belastungen ausgesetzt. Die Noppen sind herkömmlich als Kegel- oder Pyramidenstümpfe ausgebildet, wie beispielsweise aus der

DE 10 2006 052 257 A1 oder der DE 10 2005 044 800 B3 hervorgeht. Zur Erhöhung der Steifigkeit wurde bereits vorgeschlagen, die Oberfläche der Noppen beispielsweise durch rinnenartige Sicken zu strukturieren, vgl. die DE 20 2006 001 699 U1. Es hat sich jedoch überraschenderweise herausgestellt, dass durch derartige Maßnahmen die beim Tiefziehen stark gestreckten Noppen unter Druck eher einknicken, so dass sie ihre Abstütz- und Drainagefunktion ebenso verlieren wie die sonst gegebene Abdichtungsfunktion.

Ein besonderes Problem stellt dabei der Übergangsbereich zwischen Noppenmantel und Noppenkopf dar, der üblicherweise scharfkantig bzw. abgekantet ist.

Auch aus der GB 2079415 A ist ein Noppenelement mit ei-ner Mehrzahl von jeweils einen Noppenmantel und einen Noppenkopf aufweisenden Noppen, die durch Thermoformen einer Kunststofffolie gebildet sind, aber auch anderweitig hergestellt sein können, und wenigstens einseitig von der Kunststofffolie vorstehen, bekannt, bei denen der Noppenmantel wenigstens bereichsweise nach außen bombiert ist. Dabei handelt es sich um halbkugelförmige Noppenelemente, die keine hohe Druckfestigkeit aufweisen. Insbesondere gibt es hier keinen relativ steilstehenden Noppenmantel. Vielmehr erstreckt sich der Noppenmantel kuppel- bzw. gewölbeförmig, indem er aus der Folie wie eine Halbkugel hervortritt. Die Druckfestigkeit derartiger Noppen bzw. Noppenelemente ist stark begrenzet. Zudem ergibt sich nur eine relativ geringe Aufbauhöhe und somit nur eine relativ niedrige Drainagewirkung.

Der Erfindung liegt daher die Aufgabe zugrunde, ein Noppenelement mit verbesserter Steifigkeit und Formstabilität zu schaffen. Dabei soll bei gleichem Materialeinsatz eine höhere Belastbarkeit, insbesondere Druckfestigkeit, und dadurch eine höhere Drainageleistung und ein geringeres Stauchungsverhalten erzielt werden.

Diese Aufgabe wird gemäß der Erfindung dadurch gelöst, dass der Noppenmantel wenigstens bereichsweise nach außen bombiert ist und sich zum Noppenkopf hin zunehmend verjüngt.

Es wurde festgestellt, dass die Noppen herkömmlicher Noppenbahnen im Wesentlichen kurz unterhalb des Noppenkopfes, also im oberen Bereich des Noppenmantels, einknicken. Mehrere Untersuchungen haben ergeben, dass dies dadurch bedingt ist, dass bei der Umformung der regelmäßig eingesetzten schlagzähen und formstabilen Kunststoffe, insbesondere thermoplastischer formbarer Kunststoff, wie Polystyrol (PS), schlagfestes Polystyrol (PSI-HI), Styrol-Butadien, Styrol-Block-Copolymer (SPS), orientiertes Polystyrol (OPS), Acrylnitril-Butadien-StyrolCopolymer (ABS), Acrylnitril-Styrol-Acrylester-Copolymer (ASA), Styrol-Acrylnitril-Copolymer (SAN), Polyvinylchlorid (PVC-U), Polyethylen hoher Dichte (PE-HD), Polypropylen (PP), extrudiertes Polymethylmetacrylat (PMMA), gegossenes Polymethylmetacrylat (PMMA), Polycarbonat (PC), Polyamid (PA), Polyethylenterephtalat (PET-G), Polyethylenterephtalat (APET), kristallisierbares Polyethylenterephtalat (CPET), Polysulfon (PSU) sowie High Density Polyethylen (HDPE) im sogenannten Positiv-Verfahren, bei der die Außenkontur der Form abgeformt wird, die Materialverteilung in den Eckbereichen am geringsten ist. Es erfolgt eine relativ hohe Verstreckung der Folienbahn oder -platte, so dass sich scharfkantige Übergänge zwischen Noppenmantel und -kopf nachteilig auf die Materialverteilung in den Eckbereichen auswirken. Es ist daher möglichst ein Übergang mit Radien zwischen beiden Teilen anzustreben.

Die Verteilung des Kunststoffes stellt beim Tiefziehen und Thermoformen grundsätzlich ein Problem dar. Wird- die aufgeheizte oder noch warme Kunststoffplatte oder -folie vorgedehnt und dann mit Vakuum an die Wandung gesaugt (Positiv-Verfahren), so liegt in Folge der schnellen Erkaltung beim Anlegen an die Werkzeugwand im Eckbereich eines Kegel- oder Pyramidenstumpfes eine sehr dünne Schicht vor. Es ist daher notwendig, die Form so zu gestalten, dass das Kunststoffmaterial in allen Bereichen so gut wie möglich verteilt wird, um eine möglichst gleichmäßige Abkühlung und damit eine hohe Druckfestigkeit und ein geringeres Stauchungsverhalten zu erreichen. Dies gelingt am Besten durch eine nach außen bombierte Form des Noppenmantels, wobei sich der Noppenmantel zum Noppenkopf hin zunehmend verjüngt. Durch eine bombierte bzw. konvexe Auswölbung des Noppenmantels und gleichzeitige Verjüngung gelingt es besonders gut, anschließend einen stetigen Übergang zum Noppenkopf herzustellen, der ebenso besonders wichtig ist, um die angestrebte hohe Druckfestigkeit mit geringem Stauchungsverhalten zu erreichen. Der Noppenkopf ist vorzugsweise kuppel-, teilkugel- oder teilellipsoidförmig ausgebildet. Durch eine solche Ballonform wird jegliche Sollbruchstelle zwischen Noppenmantel und Noppenkopf verringert bzw. vermieden. Im Idealfall geht die Krümmung des Noppenmantels nahtlos in den Radius des Noppenkopfes über. Bevorzugt ist für einen stetigen Übergang zu sorgen.

Beim Tiefziehen, Thermoformen und Extrudieren besteht das generelle Problem darin, dass sich relativ viel Kunststoffmaterial im oberen Bereich und relativ wenig Material unten Bereich des Werkzeugs findet, weil dieses beim ersten Kontakt mit dem Werkzeug direkt abgekühlt und erst danach verstreckt wird. Deshalb ist es wichtig, die Form von vorn herein so zu gestalten, dass das Kunststoffmaterial so gut wie möglich verteilt wird. Das gelingt nach den durchgeführten Untersuchungen am Besten durch eine ballonförmige, also kuppel-, teilkugel oder teilellipsoidförmige Ausgestaltung des Noppenkopfes.

Die Grenze, bei der die Noppe insgesamt versagt und wie ein Faltenbalg zusammengestaucht wird, wird maßgeblich durch die Übergänge und Radien zwischen der oberen, druckbelastete Deckfläche, also dem Noppenkopf, und dem Noppenmantel beeinflusst. Darüber hinaus hat der Übergangsbereich zwischen- der Mantelfläche und dem Flachbereich, also der ursprünglichen Folienbahn, aus der durch Umformung die Noppen gebildet sind, eine entsprechende Bedeutung. Auch hier haben die Optimierungen zu einer bestimmten Übergangsform geführt, die die Auslösung des zerstörenden Faltprozesses weiter in Richtung höherer Drucklast verschiebt.

Das Material kann bei der erfindungsgemäßen Ausgestaltung beim Tiefziehen bzw. Thermoformen frei fließen, es gibt keinen Bereich, der beim Positiv-Verfahren durch Anlegen an die Werkzeugwand besonders schnell bzw. schneller als andere Bereiche erkaltet. Damit wird die Ausbildung einer dünnen Schicht, wie sie bisher in den Eckbereichen regelmäßig vorkam, vermieden. Durch die gewählten Maßnahmen wird eine Verbesserung der Druckfestigkeit und des Stauchungsverhalten von bis zu 55 % erzielt.

In Ausgestaltung kann auch vorgesehen sein, dass der Noppendeckel champferförmig, abgefast oder stumpfwinklig in den Noppenmantel übergeht. Derartige Abschrägungen bzw. Abfasungen und Verrundungen, etwa um 2 x 45° Grad, erleichtern ebenfalls bereits das freie Fließen des Kunststoffmaterials beim Tiefziehen.

Weiter kann vorgesehen sein, dass der Noppenkopf wenigstens bereichsweise abgeflacht ist, um ein Anlegen des Noppenelementes an eine Bauwerksabdichtung oder ein Auflegen von anderen Bauteilen oder ein Aufkaschieren, beispielsweise von Vliesen, zu erleichtern.

Weiter beansprucht wird auch eine Noppe für ein Noppenelement mit einem Noppenmantel und einem Noppenkopf, bei der der Noppenmantel wenigstens bereichsweise nach außen bombiert ist und sich zum Noppenkopf hin zunehmend verjüngt. In Ausgestaltung geht der Noppenkopf stetig in den Noppenmantel über. Der Noppenkopf ist vorteilhaft kuppel-, teilkugel- oder teilellipsoidförmig ausgebildet.

Schließlich wird auch ein Verfahren zur Herstellung eines Noppenelementes mit einer Mehrzahl von jeweils einen Noppenmantel und einen Noppenkopf aufweisenden Noppen, wobei die Noppen durch Thermoformen oder Tiefziehen im Positivverfahren ausgebildet werden, beansprucht, das sich dadurch auszeichnet, dass die Noppen mittels eines als halbes Ellipsoid ausgestalteten Formwerkzeugs ausgebildet werden. Es empfiehlt sich also, als Formwerkzeug einen nach außen bombierten Stempel zu verwenden bzw. die Kunststofffolie oder -platte über ein entsprechend konturiertes nach außen bombiertes Werkzeug tiefzuziehen. Der Stempel weist vorteilhaft einen kuppel-, teilkugel- oder teilellipsoidförmigen Kopf auf. Dadurch wird erreicht, dass ein stetiger Übergang zwischen Noppenmantel und Noppenkopf und ein gleichmäßiges Fließen des Kunststoffmaterrials erzielt werden.

Natürlich muss auch bei der bombierten Form auf eine ausreichende Entformungsschräge geachtet werden. Je größer die Entformungsschräge ist, umso schneller kann entformt werden, was auch die Taktzeit verkürzt. Außerdem verringert eine große Entformungsschräge das Risiko der Deformation des Formteils bei der Entformung. Bei Positivformwerkzeugen ist eine Entformungsschräge von α = 3° bis 5° anzustreben. Entformt wird, sobald die dickste Stelle des geformten Teils bis unterhalb der Erweichungstemperatur abgekühlt ist. Um sicher entformen zu können, muss das Formteil steif genug sein. Das Formteil darf nicht zu kalt werden.

Die Erfindung ist nachstehend anhand der Zeichnung beispielhaft näher erläutert. Diese zeigt in:

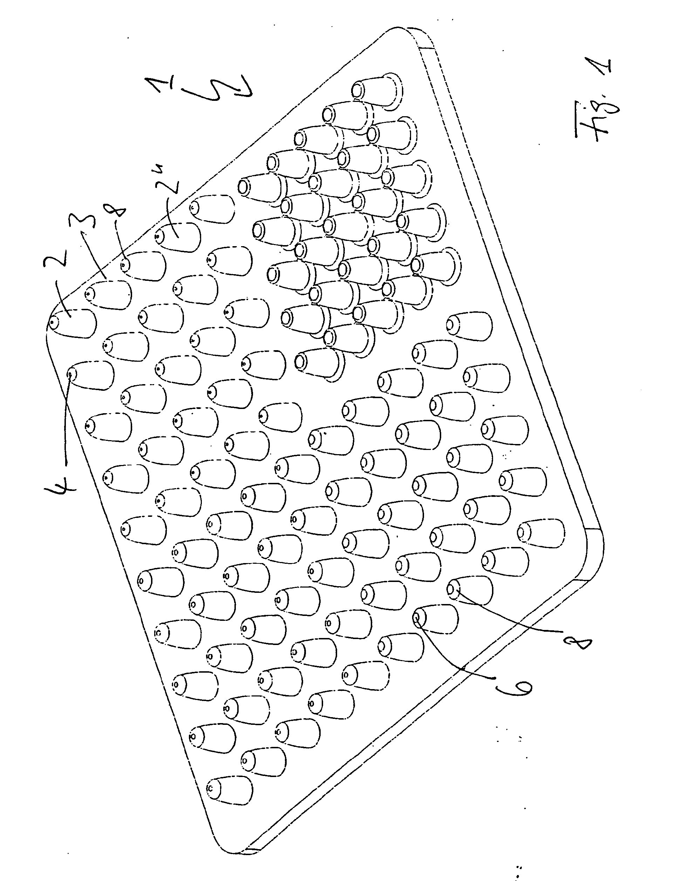

- Fig. 1: ein erfindungsgemäßes Noppenelement mit verschiedenen Noppen mit nach außen bombierten, sich zum Noppenkopf hin zunehmend verjüngenden Noppenmänteln sowie ballonförmigen und abge- flachten Noppenköpfen,
- Fig. 2: einen nach außen bombierten Stempel mit teilellipsoidförmigem Kopf,
- Fig. 3: einen nach außen bombierten Stempel mit champferförmigem, teilweise abgeflachtem Kopf,
- Fig. 4: einen nach außen bombierten Stempel mit abgeflachtem Kopf mit weitem Radius,
- Fig. 5: einen nach außen bombierten Stempel mit abgeflachtem Kopf mit engem Radius.

Ein allgemein mit 1 bezeichnetes Noppenelement weist eine Vielzahl von Noppen 2' - 2" auf. Die Noppen 2' - 2", die gleichmäßig oder ungleichmäßig, in engerem oder weiterem Abstand auf dem Noppenelement 1 angeordnet sein können, wiesen erfindungsgemäß einen wenigstens bereichsweise nach außen bombierten Noppenmantel 3 auf, der sich zum Noppenkopf 4 hin zunehmend verjüngt. Der Noppenkopf 4 ist entweder, wie mit dem Bezugszeichen 4 angedeutet, kuppel-, teilkugel- oder teilellipsoidförmig ausgebildet. Er kann aber auch - bei ansonsten stetigem Übergang 8 zwischen Noppenmantel 3 und Noppenkopf 4, wenigstens bereichsweise, insbesondere an der freien Spitze abgeflacht sein, wie durch Bezugszeichen 6 angedeutet.

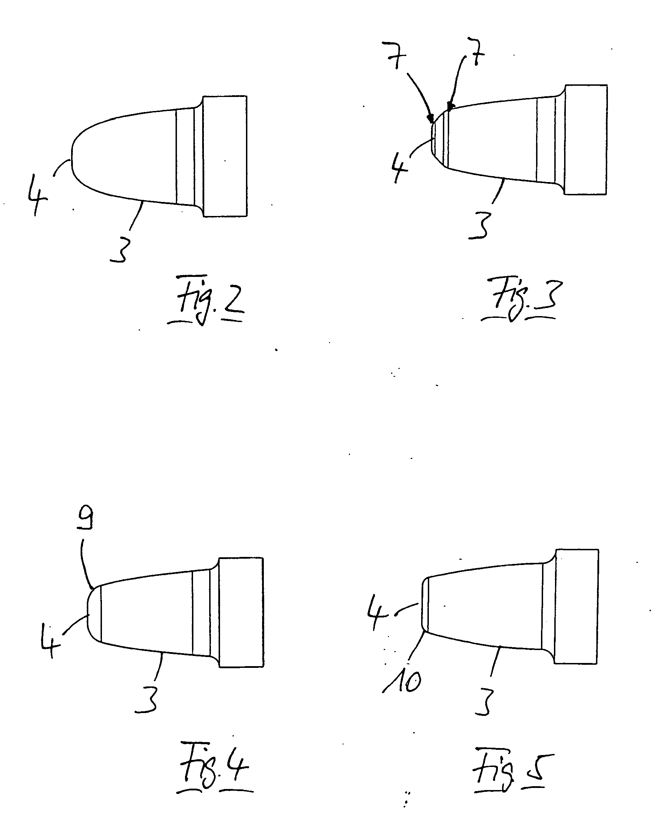

In Ausgestaltung kann der Noppenkopf 4 auch champferförmig, abgefast oder stumpfwinklig, wie durch das Bezugszeichen 7 in Fig. 3 bezogen auf den Werkzeugstempel angedeutet, in den Noppenmantel 3 übergehen.

Dabei sind verschiedene Formen denkbar. Figur 2 zeigt die vollkommen abgerundete Version, bei der der vollständig nach außen bombierte Noppenmantel 3, der sich zunehmend in Richtung des Noppenkopfes 4 verjüngt, stetig in den kuppel-, teilkugel- oder teilellipsoidförmigen Noppenkopf 4 übergeht.

In Figur 3 ist der Noppenkopf 4 hingegen, wie durch Bezugszeichen 6 angedeuet, abgeflacht und geht im übrigen, wie durch Bezugszeichen 7 angedeutet, champferförmig in den Noppenkopf 4 über. Auch sind weitere Übergänge von einem nach außen bombierten Noppenmantel 3, der sich in Richtung des Noppenkopfes 4 zunehmend verjüngt, mit mehr oder weniger weiten Radien 9, wie in Figur 4 angedeutet, oder engen Radien 10, wie in Figur 5 angedeutet, möglich, wobei der Noppenkopf 4 wiederum abgeflacht oder ballonförmig, insbesondere kuppel-, teilkugel- oder teilellipsoidförmig ausgebildet sein kann.

Wesentlich für die vorliegende Erfindung ist einerseits, dass der Noppenmantel 3 nach außen gewölbt, also beispielsweise bombiert oder konvex ausgebildet ist, und sich zum Noppenkopf 4 hin zunehmend verjüngt, und dass der Noppenmantel 3 stetig, und nicht scharfwinklig in den Noppenkopf 4 übergeht. Hierdurch wird am besten ein gleichmäßiger Materialfluss beim Tiefziehen erreicht und ein zu kurzfristiges, punktuelles Erkalten der Kunststofffolie beim ersten Kontakt mit dem Werkzeug beim Thermoformen vermieden. Schließlich ist es auch möglich, eine Verbesserung der Druckfestigkeit und eine Verminderung des Stauchungsverhaltens dadurch zu erzielen, dass die Noppen 2 weiterhin, wie herkömmlich, kegel- stumpfförmig ausgebildet werden, wobei aber der Übergangsbereich zwischen Noppenmantel 3 und Noppenkopf 4 ebenfalls mit einem möglichst großen Radius ausgebildet wird.

Natürlich ist die Erfindung nicht auf die dargestellten Ausführungsbeispiele beschränkt. Weitere Ausgestaltungen sind möglich, ohne den Grundgedanken zu verlassen. So ist es beispielsweise auch möglich, nur Teilbereiche 11', 11" des Noppenmantels 3 nach Außen bombiert sich inRichtung des Noppenkopfes 4 hin zunehmend verjüngend auszugestalten und andere Bereiche 12', 12" umgekehrt konkav einzuziehen, wobei dann allerdings diese konkave Form sich nur über einen Teil der Höhe des Noppenmantels 3 erstreckt und vor dem Übergangsbereich 8 zum Noppenkopf 4 endet, um weiterhin einen gleichmäßigen und stetigen Übergang zwischen Noppenmantel 3 und Noppenkopf 4 zu gewährleisten.

## Patentansprüche

1. Noppenelement mit einer Mehrzahl von jeweils einen Noppenmantel und einen Noppenkopf aufweisenden Noppen, die durch Thermoformen einer Kunststofffolie gebildet sind und wenigstens einseitig von der Kunststofffolie vorstehen,
**dadurch gekennzeichnet,**
**dass** der Noppenmantel (3) wenigstens bereichsweise nach Außen bombiert ist und sich zum Noppenkopf (4) hin zunehmend verjüngt.

2. Noppenelement nach Anspruch 1,
**dadurch gekennzeichnet,**
**dass** der Noppenkopf (4) stetig in den Noppenmantel (3) übergeht.

3. Noppenelement nach Anspruch 1 und/oder 2,
**dadurch gekennzeichnet,**
**dass** der Noppenkopf (4) kuppel-, teilkugel- oder teilellipsoidförmig ausgebildet ist.

4. Noppenelement nach Anspruch 1 und/oder wenigstens einem der folgenden,
**dadurch gekennzeichnet,**
**dass** der Noppenkopf (4) wenigstens bereichsweise abgeflacht ist.

5. Noppenelement nach Anspruch 1,
**dadurch gekennzeichnet,**
**dass** der Noppenkopf (4) champferförmig, abgefast oder stumpfwinkelig in den Noppenmantel (3) übergeht.

6. Noppe für ein Noppenelement mit einem Noppenmantel und einem Noppenkopf,
**dadurch gekennzeichnet,**
**dass** der Noppenmantel (3) nach Außen bombiert ist und sich zum Noppenkopf (4) hin zunehmend verjüngt.

7. Noppe nach Anspruch 6,
**dadurch gekennzeichnet,**
**dass** der Noppenkopf (4) stetig in den Noppenmantel (3) übergeht.

8. Noppe nach Anspruch 6 und/oder 7,
**dadurch gekennzeichnet,**
**dass** der Noppenkopf (4) kuppel-, teilkugel- oder teilellipsoidförmig ausgebildet ist.

9. Verfahren zur Herstellung eines Noppenelements mit einer Mehrzahl von jeweils einen Noppenmantel und einen Noppenkopf aufweisenden Noppen, wobei die Noppen durch Thermoformen im Positivverfahren ausgebildet werden,
**dadurch gekennzeichnet,**
**dass** die Noppen (2) mittels eines als halbes Ellipsoid ausgestalteten Formwerkzeugs ausgebildet werden.

10. Verfahren nach Anspruch 9,
**dadurch gekennzeichnet,**
**dass** als Formwerkzeug ein nach Außen bombierter Stempel mit einem kuppel-, teilkugel- oder teilellipsoidförmigen Kopf (4) verwendet wird.

## Claims

1. Knob element comprising a plurality of knobs each having a knob walk and a knob head, which knobs are formed by thermoforming a plastics material film and project from at least one side of the plastics material film, **characterised in that** the knob walk (3) is convex at least in some regions and progressively tapers towards the knob head (4).

2. Knob element according to claim 1, **characterised in that** the knob head (4) merges continuously into the knob walk (3).

3. Knob element according to claim 1 and/or claim 2, **characterised in that** the knob head (4) is dome-shaped, part-spherical or part-ellipsoidal in construction.

4. Knob element according to claim 1 and/or at least one of the claims thereafter, **characterised in that** the knob head (4) is flattened at least in some regions.

5. Knob element according to claim 1, **characterised in that** the knob head (4) merges into the knob walk (3) in a chamfered, bevelled or obtuse-angled manner.

6. Knob for a knob element comprising a knob walk and a knob head, **characterised in that** the knob walk (3) is convex and progressively tapers towards the knob head (4).

7. Knob according to claim 6, **characterised in that** the knob head (4) merges continuously into the knob walk (3).

8. Knob according to claim 6 and/or claim 7, **characterised in that** the knob head (4) is dome-shaped, part-spherical or part-ellipsoidal in construction.

9. Method for producing a knob element comprising a plurality of knobs each having a knob walk and a knob head, the knobs being formed by thermoforming according to the air-slip method, **characterised in that** the knobs (2) are formed by means of a moulding tool configured as a semi-ellipsoid.

10. Method according to claim 9, **characterised in that** a convex die having a dome-shaped, part-spherical or part-ellipsoidal head (4) is used.

## Revendications

1. Elément à picots avec une pluralité de picots présentant respectivement une gaine de picot et une tête de picot, qui sont formées par thermoformage d'une feuille de matériau synthétique et qui font saillie au moins d'un côté de la feuille de matériau synthétique,
**caractérisé en ce que**
la gaine de picot (3) est bombée vers l'extérieur au moins par segment et s'amincit progressivement vers la tête de picot (4).

2. Elément à picots selon la revendication 1,
**caractérisé en ce que**
la tête de picot (4) se fond progressivement dans la gaine de picot (3).

3. Elément à picots selon la revendication 1 et/ou 2,
**caractérisé en ce que**
la tête de picot (4) se présente sous la forme d'une calotte, d'une demi-sphère ou d'un demi-ellipsoïde.

4. Elément à picots selon la revendication 1 et/ou au moins l'une quelconque des revendications suivantes,
**caractérisé en ce que**
la tête de picot (4) est aplatie au moins par segment.

5. Elément à picots selon la revendication 1,
**caractérisé en ce que**
la tête de picot (4) se fond dans la gaine de picot (3) en chanfrein, en biseau ou en angle obtus.

6. Picot pour un élément à picots avec une gaine de picot et une tête de picot,
**caractérisé en ce que**
la gaine de picot (3) est bombée vers l'extérieur et s'amincit progressivement vers la tête de picot (4).

7. Picot selon la revendication 6,
**caractérisé en ce que**
la tête de picot (4) se fond progressivement dans la gaine de picot (3).

8. Picot selon la revendication 6 et/ou 7,
**caractérisé en ce que**
la tête de picot (4) se présente sous la forme d'une calotte, d'une demi-sphère ou d'un demi-ellipsoïde.

9. Procédé de fabrication d'un élément à picots ayant une pluralité de picots présentant respectivement une gaine de picot et une tête de picot, dans lequel les picots sont formés par thermoformage selon le procédé de formage positif,
**caractérisé en ce que**
les picots (2) sont formés au moyen d'un outil de formage conformé en demi-ellipsoïde.

10. Procédé selon la revendication 9,
**caractérisé en ce que**,
comme outil de formage, on utilise un poinçon bombé vers l'extérieur avec une tête (4) en forme de calotte, de demi-sphère ou de demi-ellipsoïde.
